(19) **Europäisches Patentamt European Patent Office Office européen des brevets**

(11) **EP 1 661 348 B1**

(12) **FASCICULE DE BREVET EUROPEEN**

(45) Date de publication et mention de la délivrance du brevet:
**11.06.2014 Bulletin 2014/24**

(51) Int Cl.:
***H04L 27/26*** *(2006.01)* ***H04L 25/02*** *(2006.01)*
*H04L 27/00* *(2006.01)*

(21) Numéro de dépôt: **04767724.0**

(86) Numéro de dépôt international:
**PCT/FR2004/001900**

(22) Date de dépôt: **16.07.2004**

(87) Numéro de publication internationale:
**WO 2005/011144 (03.02.2005 Gazette 2005/05)**

(54) **PROCEDE ET DISPOSITIF POUR AMELIORER L'ESTIMATION D'UN CANAL DE PROPAGATION D'UN SIGNAL MULTIPORTEUSE**

VERFAHREN UND EINRICHTUNG ZUR VERBESSERUNG DER SCHÄTZUNG EINES AUSBREITUNGSKANALS EINES MEHRTRÄGERSIGNALS

METHOD AND DEVICE FOR IMPROVING THE ESTIMATION OF A PROPAGATION CHANNEL OF A MULTICARRIER SIGNAL

(84) Etats contractants désignés:
**AT BE BG CH CY CZ DE DK EE ES FI FR GB GR HU IE IT LI LU MC NL PL PT RO SE SI SK TR**

(30) Priorité: **18.07.2003 FR 0308844**

(43) Date de publication de la demande:
**31.05.2006 Bulletin 2006/22**

(73) Titulaire: **TDF**
**75732 Paris Cedex 15 (FR)**

(72) Inventeurs:
• **JAHAN, Bruno**
**F-35190 Tinteniac (FR)**
• **LOUIN, Pierrick**
**F-35700 Rennes (FR)**

(74) Mandataire: **Bioret, Ludovic**
**Cabinet Vidon**
**16 B, rue de Jouanet - B.P. 90333**
**35703 Rennes Cedex 07 (FR)**

(56) Documents cités:
**EP-A- 0 762 703 EP-A- 1 320 232**

**Description**

**1. Domaine de l'invention.**

Le domaine de l'invention est celui des communications numériques appliquées, des systèmes de diffusion numérique hertzienne, du type appartenant au groupe comprenant DAB, DVB-T, DRM, mais également des télécommunications (ADSL, Hyperlan2, etc.).

Plus précisément, l'invention concerne les récepteurs du type DAB, DVB-T, DRM qui utilisent la démodulation OFDM (« Orthogonal Frequency Division Multiplex » en anglais, pour « Multiplexage par division orthogonal de fréquence »), laquelle est de plus en plus utilisée dans les domaines précités.

**2. L'art antérieur**

**2.1. Rappel sur le principe de la modulation OFDM**

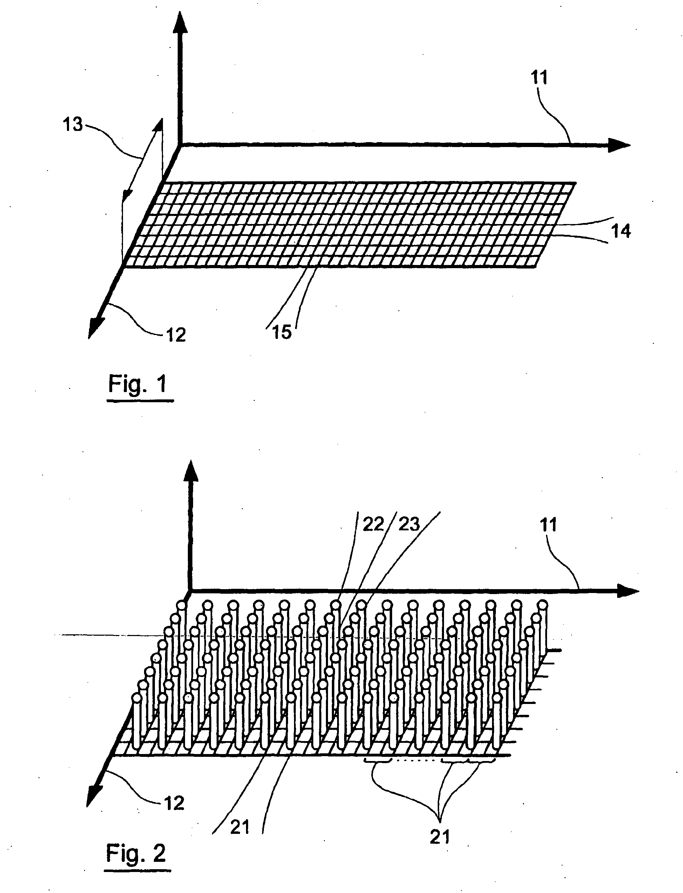

La modulation OFDM consiste à répartir dans l'espace temps/fréquence des données de durée Tu (dit temps-symbole utile) sur une pluralité de fréquences porteuses modulées indépendamment, par exemple en QPSK ou QAM. L'OFDM découpe ainsi le canal en cellules selon les axes du temps 11 et des fréquences 12, comme illustré sur la figure 1. Chacune des porteuses est orthogonale à la précédente.

Le canal de longueur prédéterminée 13 est alors constitué d'une suite de sous-bandes de fréquence 14 et d'une suite de segments temporels 15.

A chaque cellule fréquence/temps est attribuée une porteuse dédiée. On va donc répartir l'information à transporter sur l'ensemble de ces porteuses, modulée chacune à faible débit par exemple, par une modulation du type QPSK ou QAM. Un symbole OFDM comprend l'ensemble des informations portées par l'ensemble des porteuses à un instant t.

Cette technique de modulation est notamment efficace dans les situations où l'on rencontre des multitrajets. Comme illustré sur la figure 2 qui présente un ensemble de symboles OFDM 21, une même suite de symboles arrivant à un récepteur par deux chemins différents se présente comme la même information arrivant à deux instants différents et qui s'additionnent. Ces échos provoquent deux types de défauts :

- l'interférence intra symbole : addition d'un symbole avec lui-même légèrement déphasé ;
- l'interférence inter symbole : addition d'un symbole avec le suivant plus le précédent légèrement déphasé.

Entre chaque symbole transmis, on insère une zone « morte » appelée intervalle de garde 22, dont la durée 23 est choisie suffisamment grande par rapport à l'étalement des échos. Ces précautions vont limiter l'interférence inter symbole (celle ci étant absorbée par l'intervalle de garde).

A la réception, les porteuses ont subi en outre soit une atténuation (échos destructifs), soit une amplification (échos constructifs) et/ou une rotation de phase.

Pour calculer la fonction transfert du canal et ainsi effectuer une égalisation du signal avant démodulation, on insère des porteuses pilotes de synchronisation (d'amplitude souvent supérieure aux porteuses de données utiles). La valeur et l'emplacement de ces pilotes dans l'espace temps/fréquence sont prédéfinis et connus des récepteurs.

Après une interpolation en temps et en fréquences, on obtient une estimation de la réponse du canal plus ou moins pertinente en fonction du nombre de pilotes de référence et de leur répartition dans le domaine temps/fréquence.

**2.2. Application dans les bandes AM (DRM)**

La modulation OFDM est de plus en plus utilisée dans la diffusion numérique car elle très bien adaptée aux variations du canal radio : les échos, le doppler. Les ingénieurs, pour choisir la structure OFDM la mieux adaptée, étudient d'abord les caractéristiques du canal radio qui varient en fonction de la fréquence d'émission, de la bande passante du signal mais aussi, pour la radio numérique dans les bandes AM (DRM), des conditions de propagations entre le jour et la nuit et des cycles solaires.

Les récepteurs utilisés pour la démodulation OFDM exploitent essentiellement la réponse du canal calculée à partir des pilotes de référence. La justesse de cette estimation dépend donc de la proportion de pilotes de référence insérés dans les symboles OFDM.

**2.3. Inconvénients des techniques de l'art antérieur**

Un algorithme de correction de l'erreur de phase commune est connu, mais l'erreur traitée correspond à l'erreur relative entre deux symboles OFDM successifs, l'objectif étant alors de corriger les erreurs de phase dues aux défauts des oscillateurs utilisés dans les récepteurs.

Toutefois, notamment pour le DRM, on constate des variations rapides de canal, notamment lorsqu'on se déplace en automobile, qui peuvent conduire à des pertes de services momentanées (partielles ou totales).

En particulier, pour corriger les variations de phase entre deux symboles OFDM successifs, les techniques connues s'appuient sur le calcul de l'erreur de phase commune par différentiation entre deux symboles successifs. Cette correction est donc effectuée avant l'estimation de canal. C'est par exemple le cas de la solution proposée par France Télécom et Télédiffusion de France (TDF) dans leur brevet français n° FR 2,768,278. Cependant, cela peut s'avérer insuffisant, notamment dans le cas du DRM.

Le document EP 762 703 proposée par France Télécom et Télédiffusion de France (TDF) décrit le traitement de signaux multiporteuses, et la correction de leur distorsion en vue notamment de l'optimisation de la démodulation des symboles modulant ces signaux. Les données source à transmettre sont organisées en symboles modulés par une fréquence porteuse choisie parmi une pluralité de porteuses. Ce document enseigne une façon de corriger la distorsion qui est subie par ces signaux multiporteuses formés de symboles et qui est déterminée par interpolation et/ou extrapolation à partir d'estimations de référence.

### 3. Objectifs de l'invention

L'invention a notamment pour objectif de pallier ces inconvénients principaux de l'art antérieur.

Plus précisément, un objectif de l'invention est de fournir un procédé et un dispositif permettant d'optimiser l'estimation d'un canal de propagation, notamment d'un canal OFDM, par exemple pour des applications du type DRM.

Notamment, un objectif supplémentaire de l'invention est de lutter contre les évanouissements forts que l'on peut rencontrer, par exemple dans le cas du DRM.

Un autre objectif de l'invention est de fournir un procédé et un dispositif permettant de corriger les pilotes de référence en fonction d'un canal de propagation correspondant.

Un objectif supplémentaire de l'invention est de fournir un procédé et un dispositif d'estimation permettant d'affiner la synchronisation des récepteurs.

Encore un objectif de l'invention est de fournir un procédé et un dispositif qui soient faciles à mettre en oeuvre, tout en restant de coût raisonnable.

Un dernier objectif de l'invention est de fournir un procédé et un dispositif qui corrige également le problème de l'erreur de phase commune sur un signal OFDM en réception, induit par exemple par les bruits de phases des oscillateurs, en complément de l'erreur commune aux symboles OFDM sur l'amplitude.

### 4. Caractéristiques principales de l'invention

Ces objectifs, ainsi que d'autres qui apparaîtront par la suite sont atteints à l'aide d'un procédé d'estimation d'un canal de propagation pour de symboles successifs d'un signal multiporteuse comprenant chacun au moins un pilote de référence, et une pluralité de fréquences portant des données.

Un tel procédé comprend au moins une étape de correction du ou des pilotes de référence, en fonction d'une première estimation d'un canal de propagation, de façon à délivrer une seconde estimation du canal, plus précise.

Cette approche repose notamment sur l'observation, faite par les inventeurs, que les algorithmes actuellement connus parmi les solutions de l'art antérieur n'utilisent pas toutes les informations qu'il est possible d'extraire des pilotes de référence.

L'article intitulé « The effect of phase noise in COFDM » ou « l'effet du bruit de phase en COFDM » publié en 1998 dans la revue « EBU Technical Review » par J. Scott identifie le problème de l'erreur de phase commune sur un signal OFDM en réception, induit par exemple par les bruits de phases des oscillateurs. Cet article de l'art antérieur ne propose cependant aucune correction à ce problème.

Cette première étape d'estimation d'un canal de propagation tient compte des pilotes reçus avant qu'ils ne soient corrigés.

L'étape de correction comprend une étape de calcul d'un vecteur d'erreur d'amplitude et de phase, pour chacun des pilotes de référence.

Préférentiellement, l'étape de calcul d'un vecteur d'erreur met en oeuvre un moyennage d'un ensemble de vecteurs d'erreurs obtenus sur au moins un symbole. Ce moyennage peut correspondre par exemple à une intégration sur les vecteurs d'erreurs obtenus pour chacun des symboles, de façon à éliminer tout risque d'introduction de bruit que pourrait engendrer une prise en compte de pilotes atypiques.

De façon avantageuse, le moyennage est calculé sur chaque symbole.

Avantageusement, l'ensemble de vecteurs d'erreur ne comprend que les vecteurs d'erreur répondant à au moins un critère prédéterminé de qualité.

De façon préférentielle, l'étape de calcul d'un vecteur d'erreur d'amplitude et de phase comprend une étape préliminaire de rejet, pour ce calcul, des pilotes dont l'amplitude est inférieure à un premier seuil moyen minimum prédéterminé et/ou supérieure à un deuxième seuil moyen maximum prédéterminé, de façon à éviter tout risque d'introduction de biais dans le calcul du vecteur d'erreur.

En effet, à titre de simple exemple illustratif, il est fréquent lors de l'estimation classique d'un canal d'obtenir une erreur en amplitude et une erreur en phase qui soient suffisamment importantes en pourcentage pour rendre ainsi ce dernier inexploitable.

Au contraire, le procédé selon l'invention permet de démoduler tous les pilotes pour en extraire une estimation commune applicable au canal, en appliquant l'estimation du canal sur les données elles-mêmes.

Ainsi, plus le nombre de ces pilotes est important pour un même symbole et meilleur sera l'estimation des erreurs et le bruit blanc additif gaussien sera minimal. Les pilotes dont l'amplitude est très faible par rapport à la moyenne sur un symbole ou trop importante (pouvant être considérée comme un parasite) ne sont pas pris en compte dans l'opération.

Avantageusement, l'étape de correction comprend une étape d'égalisation, en fonction de la première estimation du canal.

De façon avantageuse, l'étape d'égalisation est effectuée sur l'ensemble des fréquences porteuses de chacun des symboles.

Da façon également avantageuse, l'étape d'égalisation est suivie d'une étape de calcul d'une réponse impulsionnelle d'un canal de propagation, en fonction des pilotes de référence égalisés pour l'affinage d'une synchronisation temporelle des récepteurs.

Préférentiellement, l'étape de correction des pilotes de référence comprend une division de ces pilotes par la première estimation du canal de propagation.

De façon préférentielle, l'étape de correction comprend en outre une dernière étape de correction de toutes les porteuses utiles égalisées tenant compte de la valeur moyenne obtenue en résultat du moyennage.

Le procédé selon l'invention est utilisé de façon avantageuse pour la correction d'au moins une erreur de phase et d'amplitude commune à deux cellules d'un même symbole du type OFDM («Orthogonal Frequency Division Multiplex» en anglais, pour « Multiplexage par division orthogonal de fréquence»).

L'invention concerne également un dispositif d'estimation d'un canal de propagation pour de symboles successifs d'un signal multiporteuses comprenant chacun au moins un pilote de référence, et une pluralité de fréquences portant des données.

Un tel dispositif comprend ainsi des moyens de correction du ou des pilotes de référence, en fonction d'une première estimation d'un canal de propagation, de façon à délivrer une seconde estimation du canal, plus précise.

## 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :

- la figure 1 précédemment décrite en préambule, est une représentation temps/fréquence d'un canal OFDM découpé en cellules, le canal étant alors constitué d'une suite de sous-bandes de fréquence et d'une suite de segments temporels ;
- la figure 2, également décrite ci-avant, présente un ensemble de symboles OFDM ;

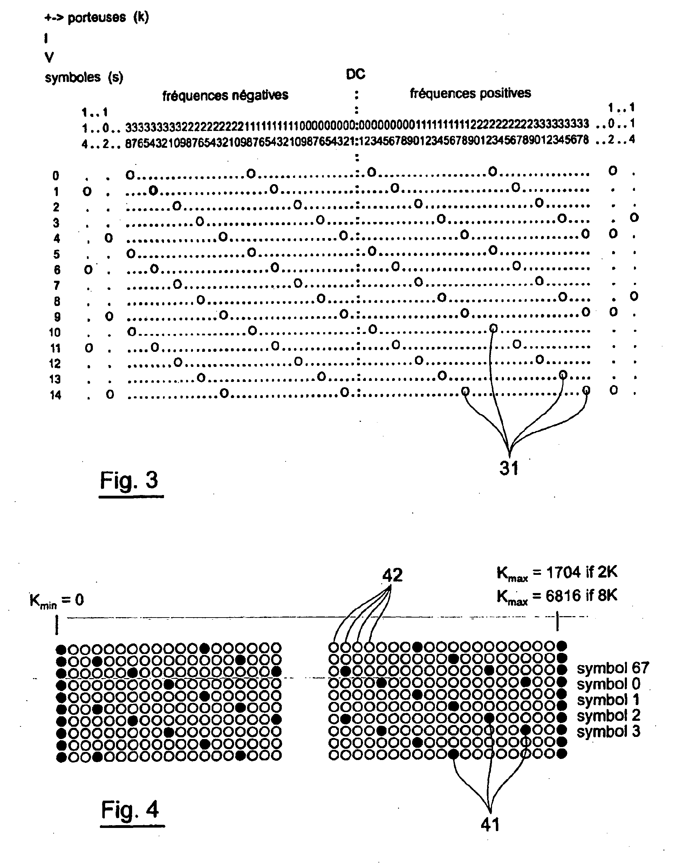

- la figure 3 illustre un exemple de structure OFDM en mode A d'un ensemble de symboles DRM ;
- la figure 4 illustre un deuxième exemple de structure OFDM, mais pour un ensemble de symboles DVB-T ;
- la figure 5 est une description schématisée de l'algorithme fonctionnel du procédé selon l'invention. Elle est détaillée ci-après.
- la figure 6 donne un exemple de la détermination d'un vecteur d'erreur global à partir de sept vecteurs d'erreur respectivement obtenus pour N= 7 pilotes. Elle est détaillée ci-après.
- la figure 7 donne un exemple de résultats obtenus sans application et avec application de l'algorithme selon l'invention, sur une diffusion expérimentale d'un signal DRM depuis une tour à la fréquence de 26 MHz avec le mode A. Elle met en évidence l'erreur résiduelle de l'estimation de canal avant et après application des corrections d'erreur commune. Elle est détaillée au paragraphe 7.2 de description d'un mode de réalisation préférentielle de l'invention.

## 7. Rappel du principe général de l'invention

L'invention vise donc à permettre la correction d'une ou plusieurs erreurs de phase et/ou d'amplitude commune aux cellules comprises dans un même symbole OFDM, de façon à optimiser l'estimation d'un canal OFDM.

De façon plus détaillée, dans le signal OFDM, des pilotes dits de référence sont en effet intégrés pour estimer le canal de propagation. Cette estimation permet d'une part de corriger les pilotes dits de données vis-à-vis du canal de propagation, et d'autre part d'obtenir la réponse impulsionnelle du canal, cette dernière étant alors utilisée pour affiner la synchronisation temporelle des récepteurs.

A titre informatif, l'utilisation des pilotes de références dans les systèmes de radiodiffusion sonore numérique, notamment du type COFDM (« Coding Orthogonal Frequency Division Multiplex » en anglais, pour « Multiplexage de Fréquences Orthogonales Codées » en français) est décrite dans le brevet français n° FR 2,658,016 du 6 février 1990 concernant un « procédé de diffusion de données numériques, notamment pour la radiodiffusion à haut débit vers des mobiles, à entrelacement temps-fréquence et démodulation cohérente, et récepteur correspondant. Un tel procédé permet notamment de déterminer, par interpolation, une référence de phase et d'amplitude pour chacun des éléments numériques, et ainsi de réaliser une démodulation cohérente.

## 7. Description d'un mode de réalisation préférentiel de l'invention

Il est donc possible avec le procédé selon l'invention de déterminer la rotation de phase d'un symbole OFDM après correction de canal. Une telle technique permet de compenser les variations de phases issues des oscillateurs des récepteurs, mais il est également possible de déterminer les variations d'amplitude commune à un symbole. Ces deux informations permettent de suivre les variations du canal au rythme des symboles dans le domaine temporel.

Dans un mode de réalisation préférentiel de l'invention, il s'agit de corriger une erreur de phase et d'amplitude commune aux cellules comprises dans un même symbole OFDM. Cette technique permet de suivre des variations de canal au rythme des symboles OFDM, ce qui est supérieur à ce que permet l'estimation de canal classique du fait de la répartition en temps et en fréquence des pilotes de référence qui sont souvent en nombre limité pour ne pas trop diminuer le débit utile.

Une fois les synchronisations temporelle et fréquentielle « grossières » établies, par corrélation des intervalles de garde, par exemple, il est possible d'obtenir la réponse du canal par interpolation sur les pilotes de références. Une fois cette estimation obtenue, une égalisation est appliquée à tous les pilotes de référence ou de données des symboles OFDM. Au niveau des pilotes de références, après égalisation, il devient alors possible de déterminer une erreur résiduelle, entre les pilotes émis et les pilotes reçus ? Celle-ci provient en général d'un bruit blanc additif gaussien ou encore, d'une erreur liée aux limites de l'interpolation temporelle et fréquentielle, c'est-à-dire, de l'estimation de canal.

En intégrant l'ensemble des vecteurs sur un symbole, ce qui revient à les moyenner, on obtient un vecteur d'erreur globale. Une confiance des vecteurs élémentaires est obtenue à partir de l'estimation de canal, cette opération permettant le rejet des faibles signaux (noyés dans le bruit) ou des pics parasites.

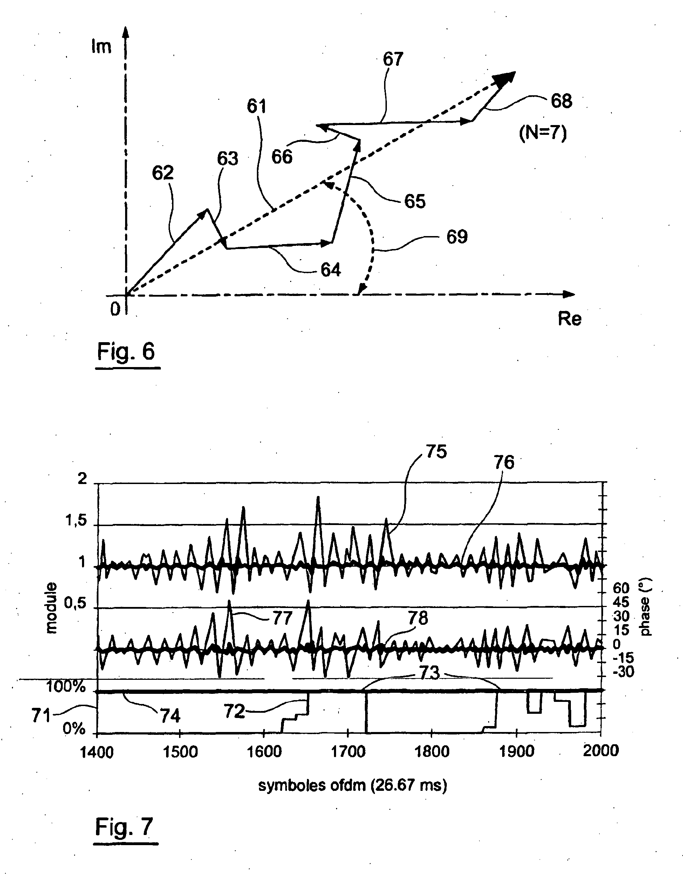

La phase de ce vecteur correspond à l'erreur commune de phase « ECP » et l'amplitude de ce vecteur à l'erreur commune d'amplitude « ECA », toutes deux exprimées au moyen des formules mathématiques suivantes et illustrées sur la figure 6. Cette figure 6 donne un exemple illustratif de la détermination d'un vecteur d'erreur global 61, à partir de sept vecteurs d'erreur (62, 63, 64, 65, 66, 67, 68) respectivement obtenus pour N= 7 pilotes.

L'erreur commune de phase « ECP » 69 s'exprime :

$$ECP = angle\left(\sum_{i=0}^{N-1} P_{\text{réf}_i}\right).$$

et l'erreur commune d'amplitude « ECA » 61 :

$$ECA = \frac{\sqrt{\left(\sum_{i=0}^{N-1} P_{\text{réf}_i}\right)^2}}{N}.$$

où :

○ $P_{\text{réf}_i}$ : est l'erreur résiduelle complexe sur les pilotes de référence i, où i est l'indice (de 0 à N-1) des N pilotes de références pris en compte ;
○ N : est la variable définissant le nombre de pilotes dans le calcul.

De façon complémentaire, si $H_1$ est la première estimation de la réponse du canal avant correction, la pondération de cette première estimation de canal avec le vecteur d'erreur global permet d'obtenir une nouvelle estimation plus précise de canal notée $H_2$ qui tient compte des erreurs de phase des oscillateurs des récepteurs. Cette deuxième estimation plus précise tient compte également des variations de canal qui ne pouvaient habituellement pas être mesurées avec les techniques de l'art antérieur et qui sont en partie à l'origine de l'amélioration de l'estimation de canal appliquée à la démodulation OFDM.

Cette deuxième estimation de canal plus précise s'exprime au moyen de la formule mathématique suivante :

$$h_2(n) = \frac{h_1(n).e(-j\,ECP)}{ECA}$$

où $h_1(n)$ : est la réponse du canal avant correction.

Il devient alors possible d'évaluer la valeur d'estimation affinée attribuée à l'ensemble des cellules égalisées par l'estimation par la formule mathématique suivante :

$$y(n) = h_2^{-1}(n) * x(n)$$

où :

○ $y(n)$ : est l'ensemble des cellules égalisées par l'estimation ;
○ $h_2(n)$ : est la réponse du canal après correction par l'ECP et l'ECA;
○ $x(n)$ : est l'ensemble des cellules associées à un symbole OFDM.

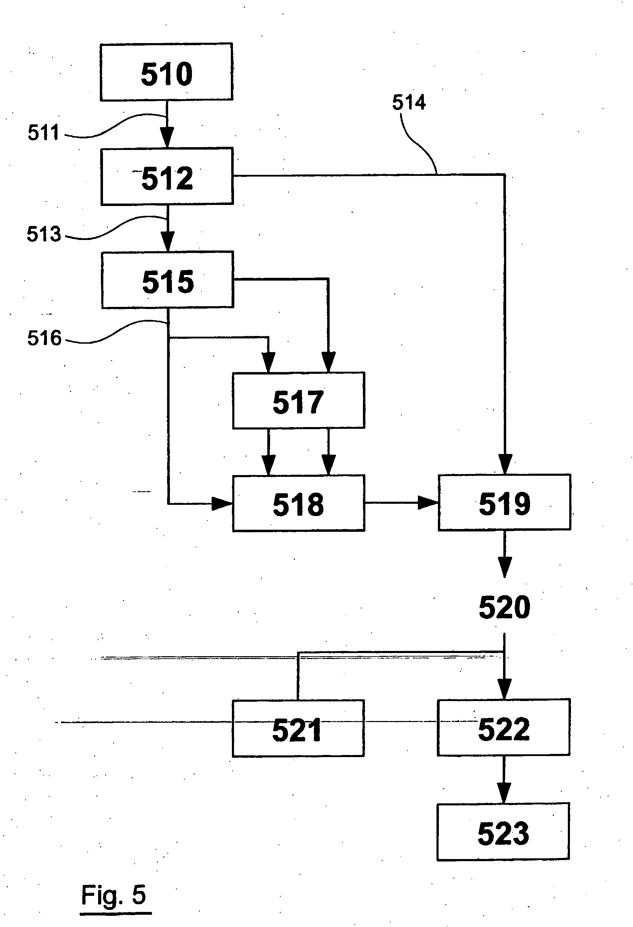

La figure 5 est une description schématisée de l'algorithme fonctionnel décrit ci-dessus et pour lequel nous rappelons les étapes principales :

- étape 1 : une transformée de Fourier Rapide (« Fast Fourier Transformation » en anglais) 510 est appliquée sur le signal reçu ramené en bande de base pour identifier l'ensemble x(n) 511 des cellules associées à chacun des symboles OFDM ;
- étape 2 : un démultiplexage 512 des cellules 511 permet ensuite de dissocier d'une part les pilotes de référence 513, et d'autre part les porteuses de données 514 ;
- étape 3 : un interpolation temps/fréquence 515 est effectuée sur l'ensemble des pilotes de références 513, de façon à obtenir une première estimation $h_1(n)$ de la réponse du canal 516 avant correction ;
- étape 4 : les calculs 517 des erreurs communes de phase (ECP) et d'erreurs communes d'amplitude (ECA) sont ensuite réalisés à partir des pilotes de référence 513, et de la première estimation $h_1(n)$ de la réponse du canal 516 avant correction ;

- étape 5 : calcul d'une deuxième estimation plus précise $h_2(n)$ de la réponse du canal 518 après correction ;
- étape 6 : égalisation 519 l'ensemble des cellules 512 à partir de l'ensemble des porteuses de données 514 et du résultat de la deuxième estimation 518, de façon à définir l'ensemble 520 des cellules égalisées $y(n)$ par l'estimation ;
- étape 7 : application du traitement des données 521 et calcul 522 de l'erreur résiduelle complexe sur les pilotes de référence i corrigés, de façon à effectuer un dernier réglage temporel 523 sur les pilotes corrigés.

La figure 7 illustre un exemple de résultats obtenus sans application et avec application de l'algorithme selon l'invention, sur une diffusion expérimentale d'un signal DRM depuis une tour à la fréquence de 26 MHz avec le mode A (qui possède un pilote de référence toutes les vingt cellules en fréquence et toutes les cinq cellules en temps). Lorsque l'on se déplace à proximité de la tour à 50km/h le service audio 71 est très perturbé : le canal non corrigé 72 comporte des ventres et des noeuds 73 dont la récurrence est supérieure à ce que permet le mode OFDM retenu. Grâce à la technique selon l'invention, après correction, le service audio 71 fonctionne parfaitement, comme illustré par la référence 74. La figure 7 illustre également les signaux obtenus pour :

- un module non corrigé 75 ;
- un module corrigé 76 ;
- une phase non corrigée 77 ;
- une phase corrigée 78.

## 8. Avantageas de la solution selon l'invention

Les procédé et dispositif d'estimation d'un canal de propagation formé de symboles successifs d'un signal multiporteuse comprenant chacun au moins au moins un pilote de référence, et une pluralité de fréquences portant des données, tels que proposés par l'invention présentent un certain nombre d'avantages, dont une liste non exhaustive est donnée ci-dessous :

- optimisation de l'estimation de canal en OFDM ;
- correction des pilotes de données vis-à-vis du canal de propagation ;
- possibilité d'obtenir la réponse impulsionnelle du canal, cette dernière pouvant être utilisée pour affiner la synchronisation temporelle des récepteurs
- application à la réception OFDM en mobilité du type comprenant : DRM, DVB-T, etc.;
- simplicité de mise en oeuvre ;
- qualité et pertinence des résultats obtenus en termes de correction ;
- rapidité de la solution et de l'algorithme.

## Revendications

1. Procédé d'estimation d'un canal de propagation d'un signal multiporteuse formant une succession de symboles (21), chaque symbole comprenant au moins un pilote de référence, et une pluralité de fréquences portant des données, où le procédé comprend les étapes suivantes :

    - extraction (512, 513) du ou desdits pilotes de référence présents dans chacun desdits symboles ;
    - première estimation (516) dudit canal de propagation, par analyse du ou desdits pilotes de référence extraits ;
    - correction (517) de chaque pilote de référence, en phase et en amplitude, en fonction de ladite première estimation, pour délivrer un ou des pilotes corrigés en phase et en amplitude, la correction comprend une étape de calcul d'un vecteur d'erreur d'amplitude et de phase, pour chacun desdits pilotes corrigés;
    - seconde estimation (518) dudit canal de propagation, en fonction de ladite première estimation et desdits vecteurs d'erreur, de façon à délivrer une seconde estimation dudit canal.

2. Procédé d'estimation d'un canal de propagation selon la revendication 1, **caractérisé en ce que** ladite étape de calcul d'un vecteur d'erreur met en oeuvre un moyennage d'un ensemble de vecteurs d'erreurs obtenus sur au moins un symbole.

3. Procédé d'estimation d'un canal de propagation selon la revendication 2, **caractérisé en ce que** ledit moyennage est calculé sur chaque symbole.

4. Procédé d'estimation d'un canal de propagation selon l'une quelconque des revendications 2 et 3, **caractérisé en ce que** ledit ensemble de vecteurs d'erreur ne comprend que les vecteurs d'erreur répondant à au moins un critère prédéterminé de qualité.

5. Procédé d'estimation d'un canal de propagation selon l'une quelconque des revendications 1 à 4, **caractérisé en ce que** ladite étape de calcul d'un vecteur d'erreur d'amplitude et de phase comprend une étape préliminaire de rejet, pour ce dit calcul, desdits pilotes dont l'amplitude est inférieure à un premier seuil moyen minimum prédéterminé et/ou supérieure à un deuxième seuil moyen maximum prédéterminé, de façon à éviter tout risque d'introduction de biais dans le calcul dudit vecteur d'erreur.

6. Procédé d'estimation d'un canal de propagation selon l'une quelconque des revendications 1 à 5, **caractérisé en ce que** ladite étape de correction (517) comprend une étape d'égalisation, en fonction de ladite première estimation du canal.

**7.** Procédé d'estimation d'un canal de propagation selon la revendication 6, **caractérisé en ce que** ladite étape d'égalisation est effectuée sur l'ensemble des fréquences porteuses de chacun desdits symboles.

**8.** Procédé d'estimation d'un canal de propagation selon la revendication 6, **caractérisé en ce qu'**il comprend, après ladite étape d'égalisation, une étape de calcul d'une réponse impulsionnelle d'un canal de propagation, en fonction des pilotes de référence égalisés pour l'affinage d'une synchronisation temporelle des récepteurs.

**9.** Procédé d'estimation d'un canal de propagation selon l'une quelconque des revendications 1 à 8, caractérisé en ce ladite étape de correction des pilotes de référence comprend une division de ces pilotes par la première estimation du canal de propagation.

**10.** Procédé d'estimation d'un canal de propagation selon la revendication 2, **caractérisé en ce que** ladite étape de correction comprend en outre une dernière étape de correction de toutes les porteuses utiles égalisées tenant compte de la valeur moyenne obtenue en résultat dudit moyennage.

**11.** Procédé d'estimation d'un canal de propagation selon l'une quelconque des revendications 1 à 10, **caractérisé en ce qu'**il est utilisé pour la correction d'au moins une erreur de phase et d'amplitude commune à deux cellules d'un même symbole du type OFDM, « Orthogonal Frequency Division Multiplex » en anglais, pour « Multiplexage par division orthogonal de fréquence ».

**12.** Dispositif d'estimation d'un canal de propagation d'un signal multiporteuse formant une succession de symboles, chaque symbole comprenant au moins un pilote de référence, et une pluralité de fréquences portant des données,
où le dispositif comprend :

    - des moyens d'extraction du ou desdits pilotes de référence présents dans chacun desdits symboles ;
    - des premier moyens d'estimation dudit canal de propagation, par analyse du ou desdits pilotes de référence extraits ;
    - des moyens de correction de chaque pilote de référence, en phase et en amplitude, en fonction de ladite première estimation, pour délivrer un ou des pilotes corrigés en phase et en amplitude, le moyen de correction calculant un vecteur d'erreur d'amplitude et de phase, pour chacun desdits pilotes corrigés;
    - des seconds moyens d'estimation dudit canal de propagation, en fonction de ladite première estimation et desdits vecteurs d'erreur, de façon à délivrer une seconde estimation dudit canal.

**13.** Récepteur comprenant un dispositif d'estimation selon la revendication 12.

**Patentansprüche**

**1.** Verfahren zur Schätzung eines Ausbreitungskanals eines Multiträgersignals, das eine Folge von Symbolen (21) bildet, wobei jedes Symbol mindestens einen Referenzpilotton und mehrere Frequenzen umfasst, die Daten übermitteln,
wobei das Verfahren die folgenden Schritte umfasst:

    - Extraktion (512, 513) des oder der Referenzpilottöne, die in jedem der Symbole vorhanden sind;
    - eine erste Schätzung (516) des Ausbreitungskanals durch Analyse des oder der extrahierten Referenzpilottöne;
    - Korrektur (517) jedes Referenzpilottons in Phase und Amplitude in Abhängigkeit von der ersten Schätzung, um einen Pilotton oder Pilottöne zu erstellen, die in Phase und in Amplitude korrigiert sind, wobei die Korrektur einen Schritt des Berechnens eines Fehlervektors der Amplitude und der Phase für jeden der korrigierten Pilottöne umfasst;
    - eine zweite Schätzung (518) des Ausbreitungskanals in Abhängigkeit von der ersten Schätzung und den Fehlervektoren, um eine zweite Schätzung des Kanals zu erbringen.

**2.** Verfahren zur Schätzung eines Ausbreitungskanals nach Anspruch 1, **dadurch gekennzeichnet, dass** der Schritt des Berechnens eines Fehlervektors eine Mittelung eines Satzes von Fehlervektoren durchführt, die an mindestens einem Symbol erhalten sind.

**3.** Verfahren zur Schätzung eines Ausbreitungskanals nach Anspruch 2, **dadurch gekennzeichnet, dass** die Mittelung an jedem Symbol berechnet wird.

**4.** Verfahren zur Schätzung eines Ausbreitungskanals nach einem der Ansprüche 2 und 3, **dadurch gekennzeichnet, dass** der Satz von Fehlervektoren nur die Fehlervektoren umfasst, die mindestens einem vorbestimmten Qualitätskriterium entsprechen.

**5.** Verfahren zur Schätzung eines Ausbreitungskanals nach einem der Ansprüche 1 bis 4, **dadurch gekennzeichnet, dass** der Schritt des Berechnens eines Fehlervektors der Amplitude und der Phase einen vorbereitenden Schritt der Ablehnung der Pilottöne für dieses Berechnen umfasst, deren Amplitude niedriger als ein erster vorbestimmter durchschnittlicher minimaler Schwellenwert und/oder höher als ein zweiter vorbestimmter durchschnittlicher maximaler Schwellenwert ist, um jegliche Gefahr der Einführung einer Verzerrung bei dem Berechnen des Fehlervektors zu vermeiden.

6. Verfahren zur Schätzung eines Ausbreitungskanals nach einem der Ansprüche 1 bis 5, **dadurch gekennzeichnet, dass** der Schritt der Korrektur (517) einen Schritt der Entzerrung in Abhängigkeit von der ersten Schätzung umfasst.

7. Verfahren zur Schätzung eines Ausbreitungskanals nach Anspruch 6, **dadurch gekennzeichnet, dass** der Schritt der Entzerrung an dem Satz der Trägerfrequenzen von jedem der Symbole durchgeführt wird.

8. Verfahren zur Schätzung eines Ausbreitungskanals nach Anspruch 6, **dadurch gekennzeichnet, dass** es nach dem Schritt der Entzerrung einen Schritt des Berechnens einer Impulsantwort eines Ausbreitungskanals in Abhängigkeit der entzerrten Referenzpilottöne für die zeitliche Synchronisation der Empfänger umfasst.

9. Verfahren zur Schätzung eines Ausbreitungskanals nach einem der Ansprüche 1 bis 8, **dadurch gekennzeichnet, dass** der Schritt der Korrektur der Referenzpilottöne ein Dividieren dieser Pilottöne durch die erste Schätzung des Ausbreitungskanals umfasst.

10. Verfahren zur Schätzung eines Ausbreitungskanals nach Anspruch 2, **dadurch gekennzeichnet, dass** der Schritt der Korrektur außerdem einen letzten Schritt der Korrektur aller entzerrten Nutzträger unter Berücksichtigung des Mittelwerts, der als Ergebnis des Mitteln erhalten ist, umfasst.

11. Verfahren zur Schätzung eines Ausbreitungskanals nach einem der Ansprüche 1 bis 10, **dadurch gekennzeichnet, dass** es für die Korrektur von mindestens einem Amplitudenphasenfehler verwendet wird, den zwei Zellen eines gleichen OFDM-Symbols, "Orthogonal Frequency Division Multiplex" auf Englisch, was für "Orthogonales Frequenzmultiplexverfahren" steht, gemeinsam haben.

12. Vorrichtung zur Schätzung eines Ausbreitungskanals eines Multiträgersignals, das eine Folge von Symbolen bildet, wobei jedes Symbol mindestens einen Referenzpilotton und mehrere Frequenzen umfasst, die Daten übermitteln, wobei die Vorrichtung Folgendes umfasst:

- Mittel zur Extraktion des oder der Referenzpilottöne, die in jedem der Symbole vorhanden sind;
- erste Schätzungsmittel des Ausbreitungskanals durch Analyse des oder der extrahierten Referenzpilottöne;
- Korrekturmittel jedes Referenzpilottons in Phase und Amplitude in Abhängigkeit von der ersten Schätzung, um einen Pilotton oder Pilottöne zu erstellen, die in Phase und in Amplitude korrigiert sind, wobei das Korrekturmittel einen Fehlervektor der Amplitude und der Phase für jeden der korrigierten Pilottöne berechnet;
- zweite Schätzungsmittel des Ausbreitungskanals in Abhängigkeit von der ersten Schätzung und den Fehlervektoren, um eine zweite Schätzung des Kanals zu erbringen.

13. Empfänger, der eine Vorrichtung zur Schätzung nach Anspruch 12 umfasst.

## Claims

1. Process for estimating a propagation channel of a multi-carrier signal forming a succession of symbols each comprising at least one reference pilot and a plurality of frequencies carrying data, wherein the process comprises the following steps:

    - extraction of the said reference pilot(s) present in each of the said symbols;
    - first estimate of the said propagation channel, by analysis of the said extracted reference pilot(s)
    - correction of the said reference pilot(s), in phase and amplitude, as a function of the said first estimate, to deliver pilot(s) with phase and amplitude correction, said correction step comprising a step to calculate an amplitude and phase error vector for each of the said corrected pilots;
    - second estimate of the said propagation channel, as a function of said first estimate and said error vectors, so as to deliver a second estimate of the said channel.

2. Process for estimating a propagation channel according to claim 1, **characterised in that** the said error vector calculation step comprises averaging of a set of error vectors obtained on at least one symbol.

3. Process for estimating a propagation channel according to claim 2, **characterised in that** the said averaging is calculated on each symbol.

4. Process for estimating a propagation channel according to either of claims 2 and 3, **characterised**

**in that** the said set of error vectors only comprises error vectors that satisfy at least one predetermined quality criterion.

5. Process for estimating a propagation channel according to any one of claims 2 to 4, **characterised in that** the said calculation step for an amplitude and phase error vector comprises a preliminary step in which the said pilots with an amplitude less than a first predetermined minimum average threshold and / or greater than a second predetermined maximum average threshold are rejected, so as to prevent any risk of introducing a bias into the calculation of the said error vector.

6. Process for estimating a propagation channel according to any one of claims 1 to 5, **characterised in that** the said correction step comprises an equalisation step that depends on the first channel estimate.

7. Process for estimating a propagation channel according to claim 6, **characterised in that** the said equalisation step is performed on all carrier frequencies of each of the said symbols.

8. Process for estimating a propagation channel according to claim 6, **characterised in that** it comprises a step, after the said equalisation step, to calculate a pulse response of a propagation channel as a function of reference pilots equalised for refining synchronisation of receivers in time.

9. Process for estimating a propagation channel according to any one of claims 1 to 8, **characterised in that** the said reference pilot correction step comprises a division of these pilots by the first propagation channel estimate.

10. Process for estimating a propagation channel according to claim 2, **characterised in that** the said correction step also comprises a final step to correct all equalised useful carriers taking account of the average value obtained as a result of the said averaging.

11. Process for estimating a propagation channel according to any one of claims 1 to 10, **characterised in that** it is used for correction of at least one phase and amplitude error common to two cells in the same OFDM, Orthogonal Frequency Division Multiplex, type symbol.

12. Device for estimating a propagation channel formed of a multi-carrier signal forming a succession of symbols each comprising at least one reference pilot, and a plurality of data carrier frequencies, wherein said device comprises:

- means for extraction of the said reference pilot(s) present in each of the said symbols;
- means for making the first estimate of the said propagation channel, by analysis of the said extracted reference pilot(s)
- means of correcting the said reference pilot(s), in phase and amplitude, as a function of the said first estimate, to deliver one or more pilots with phase and amplitude correction, said means of correcting calculating an amplitude and phase error vector for each of the said corrected pilots;
- second means of estimating the said propagation channel, as a function of said first estimate and said error vectors, so as to deliver a second estimate of the said channel.

13. Receiver comprising a device for estimating according to claim 12.

Fig. 1

Fig. 2

+-> porteuses (k)

I

V

symboles (s)                                                    DC
              fréquences négatives            :         fréquences positives
        1..1                                                                              1..1
        1..0.. 3333333333222222222211111111110000000000:0000000000111111111122222222223333333333 ..0..1
        4..2.. 8765432109876543210987654321098765432211:123456789012345678901234567890123456780 ..2..4
                                                         :
    0   . .  O...............O.................:.O......................O................. O .
    1   O .  ....O...................O.........:....O.................O............. . .
    2   . .  ........O....................O.....:.....O.................O......... . .
    3   . .  ...........O....................O..:.............O.................O.... . O
    4   . O  ..............O...............O.:.........O.................O O .
    5   . .  O...............O.................:.O..................O.......... . .
    6   O .  ....O...................O.........:....O.................O......... . .
    7   . .  ........O....................O.....:.....O.................O.... . .
    8   . .  ...........O....................O..:.............O.................O.... . O
    9   . O  ..............O...............O.:.........O.................O O .
    10  . .  O...............O.................:.O..................O.......... . .
    11  O .  ....O...................O.........:....O.................O......... . .
    12  . .  ........O....................O.....:.....O.................O.... . .
    13  . .  ...........O....................O..:.............O.................O.... . .
    14  . O  ..............O...............O.:.........O....................O O .

                                                                              31

## Fig. 3

$K_{max} = 1704$ if 2K

$K_{max} = 6816$ if 8K

42

$K_{min} = 0$

symbol 67
symbol 0
symbol 1
symbol 2
symbol 3

41

## Fig. 4

Fig. 5

Fig. 6

symboles ofdm (26.67 ms)

Fig. 7

## RÉFÉRENCES CITÉES DANS LA DESCRIPTION

**Documents brevets cités dans la description**

- FR 2768278
- EP 762703 A
- FR 2658016